# EUROPÄISCHE PATENTSCHRIFT

(11) **EP 1 107 847 B1**
(45) Veröffentlichungstag und Bekanntmachung des Hinweises auf die Patenterteilung: **29.05.2002**
(21) Anmeldenummer: 99944344.3
(22) Anmeldetag: 07.08.1999
(51) Int. Cl.: B23Q 9/00, B23D 59/00, F16B 2/24

(54) **HALTEEINRICHTUNG ZUM HALTEN EINES ARBEITSGERÄTS**
FIXING DEVICE FOR FIXING A TOOL
DISPOSITIF DE RETENUE POUR MAINTENIR UN ENGIN DE TRAVAIL

(30) Priorität: 28.08.1998 DE 19839341
(43) Veröffentlichungstag der Anmeldung: 20.06.2001
(73) Patentinhaber: Dolmar GmbH, 22045 Hamburg (DE)
(72) Erfinder: JAENSCH, Wolfgang, D-22967 Tremsbüttel (DE); ZIEGS, Carsten, D-22147 Hamburg (DE)
(74) Vertreter: Siewers, Gescha, Dr.
(86) Internationale Anmeldenummer: EP9905726
(87) Internationale Veröffentlichungsnummer: WO0012257

(56) Entgegenhaltungen:
- DE-A- 3 444 795
- DE-C- 452 537
- DE-U- 7 040 737
- DE-U- 9 216 550
- GB-A- 1 207 741
- US-A- 3 675 689

## Beschreibung

Die Erfindung betrifft eine Halteeinrichtung an einer Führungseinrichtung zum Halten von Arbeitsgeräten wie mobile Trennschleifer, insbesondere an einem Führungswagen.

Handarbeitsgeräte, wie beispielsweise Trennschleifer, werden häufig im wechselnden Einsatz mobil oder stationär verwendet. Außerdem besteht häufig ein Bedarf, das Arbeitsgerät auf einem Führungswagen zu befestigen, um präzises und ergonomisch günstiges Arbeiten zu ermöglichen. Bei einem Trennschleifer ergibt sich dadurch beispielsweise die Möglichkeit, präzise Schnitte mit definierter Tiefe in Asphalt oder Beton auszuführen.

Üblicherweise sind Halteeinrichtungen für Arbeitsgeräte mit mehr oder weniger individuell auf das Arbeitsgerät bezogenen Halteeinrichtungen ausgestattet, an denen das Arbeitsgerät an mehreren Stellen verschraubt wird. Derartige Halteeinrichtungen an einem Führungswagen für Kettensägen sind aus der US 3,675,689 bekannt. Der Gegenstand der Erfindung ist gegenüber dieser Druckschrift als nächstliegendem Stand der Technik abgegrenzt. Diese Befestigungsvariante ist sehr zeitaufwendig, insbesondere wenn das Gerät wechselnd mobil und stationär verwendet werden soll. Außerdem ist das damit verbundene Gefahrenpotential nicht zu unterschätzen, da bei Arbeiten unter Zeitdruck die Verschraubungen unter Umständen nicht ausreichend festgezogen werden, so daß vor allem sehr kraftvolle Geräte, wie beispielsweise Trennschleifer, sich aus der Halterung lösen und schwere Verletzungen verursachen können.

In der DE 452 537 ist eine Halteklammer für Musterkarten aus gebogenem Draht offenbart. Die Halteklammer hält die Musterkarte in Form einer kraftschlüssigen Verbindung. In der GB 1,207,741 ist eine Kabel- oder, Rohrhalterung aus gebogenem Draht offenbart. Die Kabel werden durch eine kraftschlüssige Verbindung gehalten.

In der DE 70 40 737 U ist ein Führungswagen für ein aus einem Werkzeug und einem Antriebsmotor bestehenden Arbeitsgerät insbesondere für ein Trennschleifer offenbart. Der Trennschleifer ist mittels Schwingmettallelementen am Führungswagen befestigt.

Der Erfindung liegt die Aufgabe zugrunde, eine Halteeinrichtung vorzustellen, bei der das Arbeitsgerät in einfacher und schneller Weise ohne Zuhilfenahme von Werkzeug befestigt werden kann.

Erfindungsgemäß wird die Aufgabe durch eine Halteeinrichtung mit den Merkmalen von Patentanspruch 1 gelöst. Vorteilhafte Weiterentwicklungen der Erfindung sind den übrigen Ansprüchen zu entnehmen.

Die erfindungsgemäße Halteeinrichtung an einer Führungseinrichtung zum Halten von Arbeitsgeräten wie mobile Trennschleifer, verfügt über eine Aufnahme mit mindestens einem Übergriffelement. Dieses Übergriffelement wirkt mit einem Halteelement am Arbeitsgerät derart zusammen, daß das Arbeitsgerät mit dem Halteelement an dem Übergriffelement der Aufnahme einhängbar ist. Durch Rotation um eine Drehachse ist das Arbeitsgerät dann von einer Einsetzposition in eine gehalterte Position überführbar.

Die erfindungsgemäße Halteeinrichtung kann über ein oder mehrere Übergriffelemente verfügen, wobei insbesondere zwei Übergriffelemente bevorzugt werden. Die Übergriffelemente können als Drahthaken ausgebildet sein. Die Halteelemente des Arbeitsgeräts können dann unter den Haken eingehängt werden.

Durch eine Rotationsbewegung des Arbeitsgeräts um die Drehachse, die in der Regel durch die Anordnung der Halteelemente definiert wird, wird das Gerät aus der Einsetzposition, in der es in die Halteeinrichtung eingeführt bzw. aus ihr entnommen werden kann, in eine gehalterte Position überführt, in der es in der Halteeinrichtung befestigt ist. Die Befestigung des Gerätes in der gehalterten Position kann dadurch unterstützt werden, daß die Aufnahme der Haltevorrichtung mit einer Stützfläche am Arbeitsgerät derart zusammenwirkt, daß bei der Rotationsbewegung, die das Gerät in die gehalterte Position überführt, eine Kraft aufgebaut wird, die eine Relativbewegung zwischen Halteelement und Übergriffelement bewirkt. Dadurch wird erreicht, daß das Gerät leicht in die Übergriffelemente einsetzbar ist, wobei in der Einsetzposition noch keine feste Halterung des Geräts erzielt wird. Bei der Rotationsbewegung in die gehalterte Position stützt sich dann die Stützfläche derart an der Aufnahme ab, daß die Halteelemente und die Übergriffelemente eine Relativbewegung zueinander vollführen, so daß die Halteelemente in der gehalterten Position von den Übergriffelementen fixiert werden.

Zusätzlich oder alternativ zur Relativbewegung zwischen Halte- und Übergriffelementen kann bei der Rotationsbewegung durch das Abstützen der Stützfläche an der Aufnahme auch eine Kraft zwischen Halte- und Übergriffelementen aufgebaut werden, die beide in der gehalterten Position zusammenhält.

Die Stützfläche kann entweder am Gehäuse oder an dem bzw. den Halteelementen angeordnet sein, wobei im letzteren Fall selbstverständlich ist, daß alle, einige oder auch nur eines der Halteelemente mit einer Stützfläche ausgerüstet sein können.

Vorzugsweise verfügt die Aufnahme über ein elastisches Element, das mit der Stützfläche des Arbeitsgeräts zusammenwirkt. Dadurch wird erreicht, daß das elastische Element eine zusätzliche Kraft auf das Arbeitsgerät ausübt, die die Halteelemente in Richtung des bzw. der Übergriffelemente drückt. Alternativ zum elastischen Element an der Aufnahme kann auch die Stützfläche als elastisches Element ausgebildet sein.

Dabei ist zur sicheren Halterung des Arbeitsgeräts die maximale verbleibende Strecke, um die das elastische Element in der gehalterten Position des Arbeitsgerätes noch verformbar ist, vorzugsweise kleiner als der Übergriff der Übergriffelemente über die Achse. Dadurch wird verhindert, daß das Gerät durch Krafteinwirkung entgegen der Kraftrichtung des elastischen Elements aus dem bzw. den Übergriffelementen ausgehängt werden kann.

In einer vorteilhaften Weiterbildung der Erfindung kann das elastische Element eine progressiv ansteigende Federkraft aufweisen. Dadurch kann das Arbeitsgerät im ersten Bereich der Rotationsbewegung relativ leicht bewegt werden, während der letzte Bewegungsabschnitt entgegen die stärker werdende elastische Kraft zwar schwerer zurückzulegen ist, dafür aber eine feste Halterung in der Halteeinrichtung gewährleistet. Die Kraftzunahme bei der Rotationsbewegung kann vorteilhaft dadurch kompensiert werden, daß die elastische Federkraft erst in einem Bereich der Rotationsbewegung spürbar ansteigt, in dem der Geräteschwerpunkt nicht mehr entgegen die Schwerkraft angehoben werden muß.

Das elastische Element kann beispielsweise in Form eines federnden Drahtbügels ausgeführt sein. Vorzugsweise ist dieser Drahtbügel einstückig mit dem bzw. den Übergriffelementen ausgeführt, insbesondere, wenn diese als Drahthaken ausgeführt sind.

Um das Arbeitsgerät zuverlässig in der gehalterten Position zu sichern, kann die Halteeinrichtung über eine lösbare Arretierungsvorrichtung verfügen, die die Rotation des Geräts aus der gehalterten Position heraus in Richtung der Einsetzposition sperrt.

Um die beim Einsatz des Gerätes auftretenden Kräfte möglichst gut in die Halteeinrichtung einzuleiten und unerwünschte Schwingungen des Gerätes im Betrieb zu vermeiden, ist es vorteilhaft, eine zweite Aufnahme vorzusehen, die die Rotationsbewegung des Gerätes beim Einhängvorgang bei Erreichen der gehalterten Position begrenzt. Diese zweite Aufnahme dient als Anschlag des Gerätes in der gehalterten Position. Außerdem können ein oder mehrere Anschläge vorgesehen sein, die die Bewegung des Arbeitsgerätes normal zur Drehebene der Rotationsbewegung einschränken. Dadurch wird verhindert, daß das Gerät schief in der Halterung befestigt wird oder seitlich herausrutschen kann.

Gemäß einem Ausführungsbeispiel der erfindungsgemäßen Halteeinrichtung ist die Arretierungseinrichtung der zweiten Aufnahme zugeordnet. Das Arbeitsgerät wird dann in der Einsetzposition in die erste Aufnahme eingehängt und durch die oben beschriebene Rotationsbewegung in die gehalterte Position überführt. In dieser Position wird es durch die Arretierungsvorrichtung an der zweiten Aufnahme gesichert.

Eine bevorzugte Ausführung einer Arretierungsvorrichtung an der zweiten Aufnahme kann um eine senkrecht zur Drehachse des Arbeitsgerätes beim Einhängevorgang stehende Achse von einer gelösten in eine arretierende Position überführt werden. Die Verriegelungsbewegung erfolgt also im wesentlichen von der Seite des Gerätes aus.

Eine besonders bevorzugte Ausführungsform der erfindungsgemäßen Arretierungseinrichtung sieht vor, daß die Arretierungseinrichtung über einen Überwurf verfügt, der mit einer Fläche des Arbeitsgerätes derart zusammenwirkt, daß der Überwurf in der arretierenden Position der Arretierungseinrichtung durch eine elastische Kraft in Kontakt mit der Fläche des Arbeitsgerätes gehalten wird. Der Überwurf kann also nur entgegen einer Kraft aus seiner arretierenden Position bewegt werden. Das Gerät ist in der gehalterten Position gesichert, ohne daß zur Montage oder Demontage Werkzeug eingesetzt werden müßte.

Durch die erfindungsgemäße Halteeinrichtung ist das Verschrauben des Arbeitsgeräts in der Halteeinrichtung vollständig überflüssig. Das Arbeitsgerät kann innerhalb von kürzester Zeit in die Halteeinrichtung eingesetzt und wieder herausgenommen werden.

Für den Fachmann ergibt sich von selbst, daß die erfindungsgemäße Halteeinrichtung auch in umgekehrter Weise funktioniert, also daß das Übergriffelement am Arbeitsgerät und das Halteelement an der Aufnahme der Halteeinrichtung angeordnet ist.

Die Erfindung wird im folgenden anhand der beigefügten Abbildungen näher erläutert:
- Fig. 1: zeigt einen Führungswagen mit mittels einer erfindungsgemäßen Halteeinrichtung darauf montiertem Trennschleifer in perspektivischer Darstellung;
- Fig. 2: zeigt ein Ausführungsbeispiel einer erfindungsgemäßen Halteeinrichtung ohne Arbeitsgerät in perspektivischer Darstellung;
- Fig. 3: zeigt das Ausführungsbeispiel gemäß Fig. 2 mit Arbeitsgerät in Einsetzposition in seitlicher Darstellung
- Fig. 4: entspricht Fig. 3, wobei das Arbeitsgerät sich aber in der gehalterten Position befindet;
- Fig. 5: stellt eine Prinzipskizze einer anderen Ausführungsform der erfindungsgemäßen Halteeinrichtung dar.
- Fig. 6: zeigt die zweite Aufnahme einer erfindungsgemäßen Halteeinrichtung in perspektivischer Darstellung.

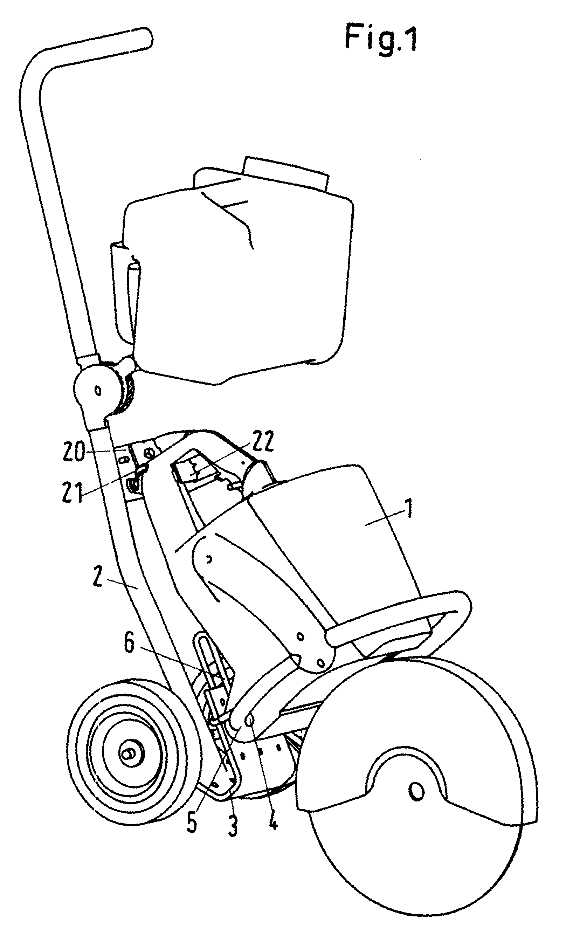

An dem in **Fig. 1** dargestellten Führungswagen 2 ist ein Trennschleifer 1 befestigt. Der Trennschleifer befindet sich in einer gehalterten Position, wobei er durch zwei Aufnahmen 3, 20 am Führungswagen gehalten wird. Die erste Aufnahme 3 verfügt über zwei Übergriffelemente in Form von Drahthaken 4, die mit rohrförmigen Halteelementen 5 am Trennschleifer 1 zusammenwirken. In der dargestellten gehalterten Position wird die Zusammenwirkung von den hakenförmigen Übergriffelementen 4 und den rohrförmigen Halteelementen 5 durch ein elastisches Element in Form eines Drahtbügels 6 unterstützt. Der Drahtbügel 6 wirkt dabei mit einer in der Abbildung nicht erkennbaren Stützfläche am Gehäuse des Trennschleifers 1 zusammen. Der Trennschleifer 1 wird in die dargestellte gehalterte Position durch eine Drehbewegung um eine Drehachse gebracht, die durch die Position der rohrförmigen Halteelemente 5 unter den hakenförmigen Übergriffelementen 4 bestimmt ist.

In der gehalterten Position wird der Trennschleifer 1 dann durch die zweite Aufnahme 20 fixiert, die einen Anschlag in Richtung der Drehbewegung definiert. Zum anderen sind noch Anschläge 21 an der zweiten Aufnahme 20 vorgesehen, die die seitliche Bewegung des Trennschleifers 1 einschränken, so daß er in einer definierten Position gehaltert ist. Zur Fixierung des Trennschleifers 1 in der gehalterten Position dient die Arretierungseinrichtung 22, die seitlich über den Handgriff des Arbeitsgeräts 1 herübergeklappt werden kann.

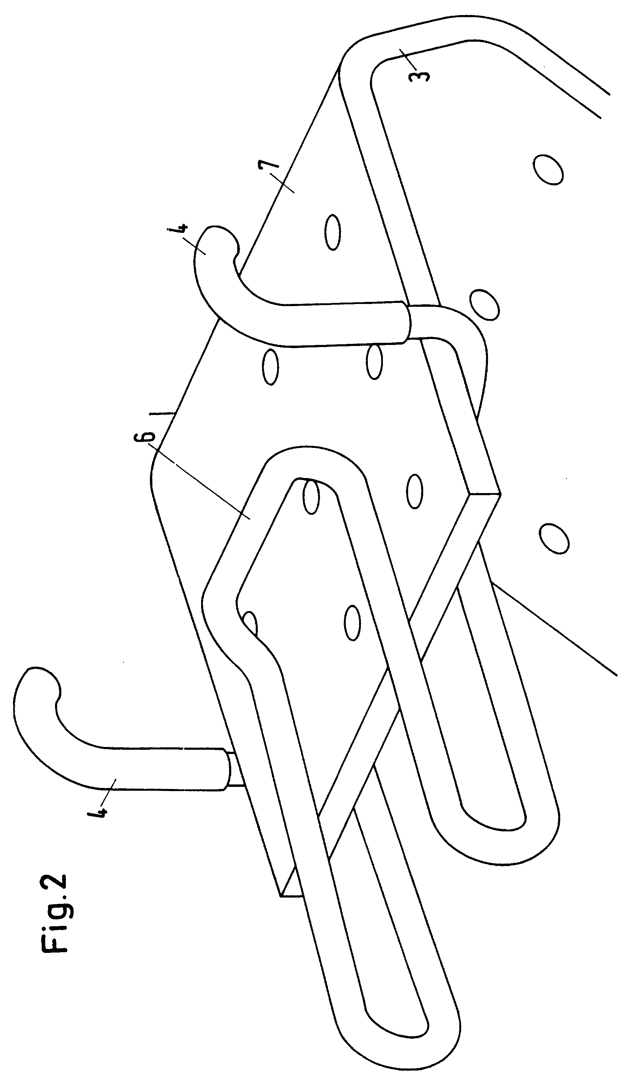

**Fig. 2** zeigt die erste Aufnahme 3 der Halteeinrichtung gemäß Fig. 1 ohne eingesetztes Arbeitsgerät im Detail. Zu erkennen sind die Übergriffelemente 4 in Form von Drahthaken, unter denen die in dieser Abbildung nicht dargestellten Halteelemente des Arbeitsgeräts eingehakt werden. Weiterhin ist das elastische Element 6 in Form eines Drahtbügels zu erkennen, der mit der Stützfläche am Arbeitsgerät derart zusammenwirkt, daß die Halteelemente des Arbeitsgeräts bei der Rotationsbewegung in die gehalterte Position in Richtung der Drahthaken 4 gedrückt werden. Die Drahthaken 4 und der Drahtbügel 6 sind einstückig ausgeführt und durch geeignete, nicht dargestellte Befestigungsmittel mit der Grundplatte 7 der Aufnahme 3 verbunden. Der Drahtbügel 6 weist in entlasteter Position einen gewissen Abstand zur Grundplatte 7 auf, um die elastische Wirkung zu gewährleisten.

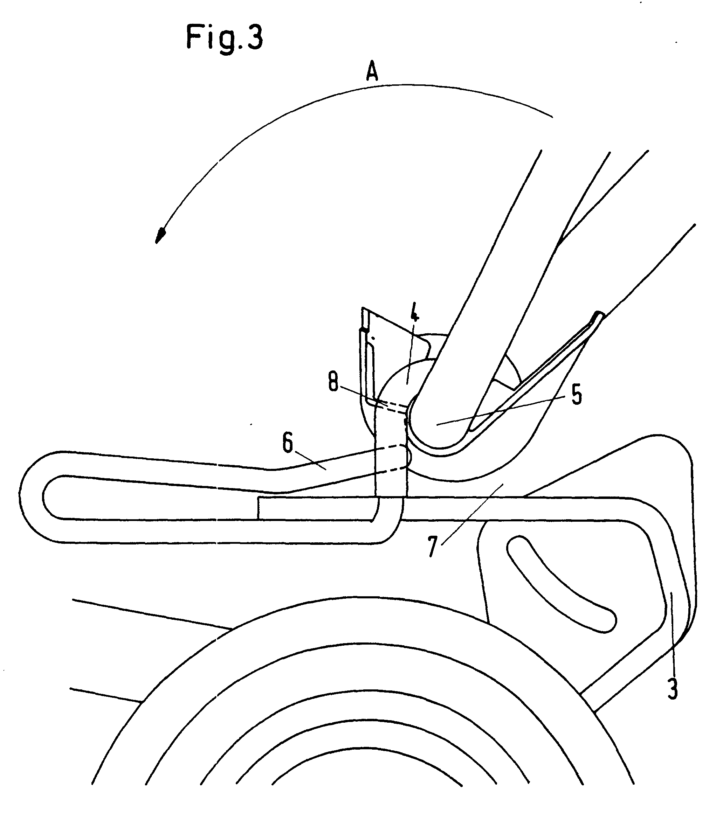

**Fig. 3** ist eine seitliche Darstellung der ersten Aufnahme gemäß Fig. 2, wobei in dieser Figur zusätzlich ein rohrförmiges Halteelement 5 des Arbeitsgeräts dargestellt ist. Das Arbeitsgerät befindet sich in dieser Darstellung in der Einsetzposition. Es ist zu erkennen, daß das Arbeitsgerät mit dem rohrförmigen Halteelement 5 unter den Drahthaken 4 locker eingehängt wird. Danach wird das Arbeitsgerät aus dieser Einsetzposition durch eine Rotationsbewegung in Richtung des Pfeiles A um eine Drehachse, die im wesentlichen durch die Position der rohrförmigen Halteelemente 5 unter den Drahthaken 4 bestimmt wird, in die gehalterte Position überführt. Während dieser Bewegung gelangt die Stützfläche 8 am Gehäuse des Arbeitsgeräts in Kontakt zu dem elastischen Drahtbügel 6, der das rohrförmige Halteelement 5 in Richtung der Drahthaken 4 vorspannt.

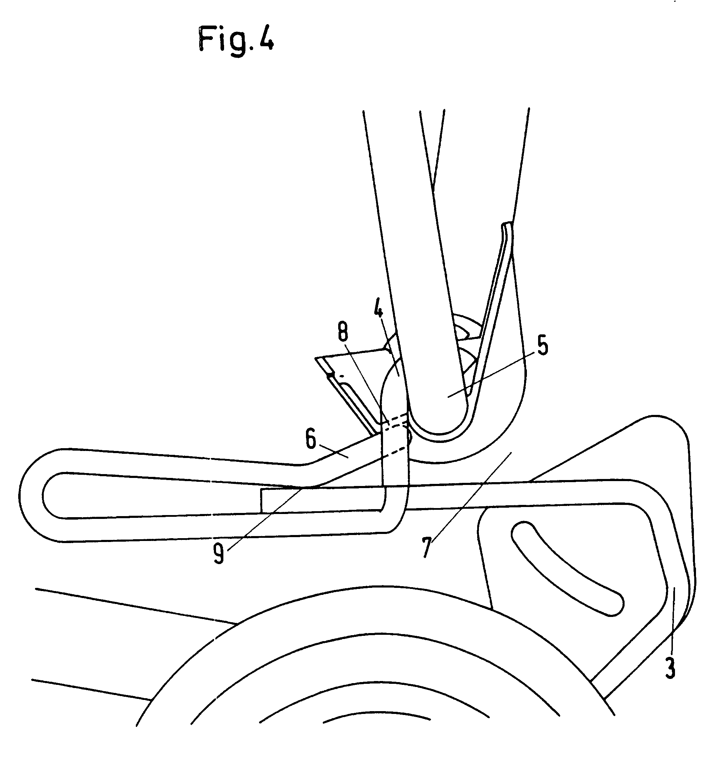

**Fig. 4** zeigt die erste Aufnahme gemäß Figur 3, wobei sich das Arbeitsgerät in dieser Abbildung in der gehalterten Position befindet. Es ist zu erkennen, daß die Stützfläche 8 nun in Kontakt mit dem Drahtbügel 6 steht, der das Halteelement 5 in Richtung der Drahthaken 4 vorspannt. Es ist weiter zu erkennen, daß während der Rotationsbewegung, die das Arbeitsgerät aus der Einsetzposition in die gehalterte Position überführt, der Drahtbügel 6 zunächst im in der Abbildung linken Bereich elastisch verformt wird, so daß die zu dieser Verformung erforderliche Kraft relativ gering ist. Diese elastische Verformung findet ihr Ende, sobald der Drahtbügel am Knick 9 in Anlage mit der Grundfläche 7 der ersten Aufnahme 3 gelangt. Danach wird nur noch der rechte Abschnitt des Drahtbügels elastisch verformt, wofür eine höhere Kraft erforderlich ist. Das Halteelement 5 wird somit zuverlässig gegen die Drahtbügel 4 gepreßt. Eine sichere Halterung des Geräts ist gewährleistet.

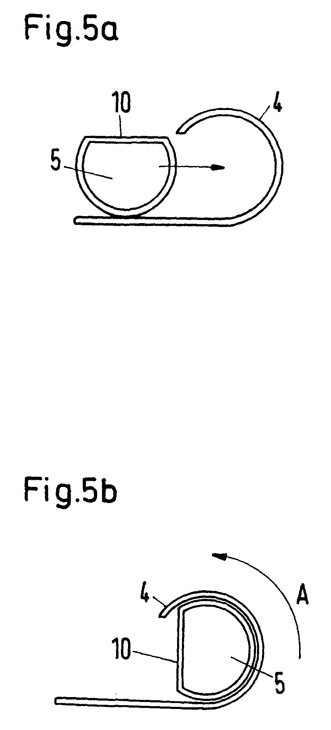

**Fig. 5** zeigt eine Prinzipskizze einer anderen Ausführungsform der erfindungsgemäßen Halteeinrichtung. Das rohrförmige Halteelement 5 des Arbeitsgeräts verfügt über eine abgeflachte Seite 10. In Figur 5a ist die Einsetzposition des Arbeitsgeräts in das Übergriffelement 4 der Aufnahme dargestellt. Das Halteelement 5 wird mit der abgeflachten Seite in das Übergriffelement 4 eingeschoben. Durch die dann erfolgende Rotationsbewegung in Richtung des Pfeiles A wird das Arbeitsgerät in die in Figur 5b schematisch dargestellte gehalterte Position überführt. Das Halteelement 5 befindet sich in der gehalterten Position fest innerhalb des Übergriffelementes 4. Eine Entnahme des Halteelements 5 aus dem Übergriffelement 4 ist in dieser Position nicht mehr möglich.

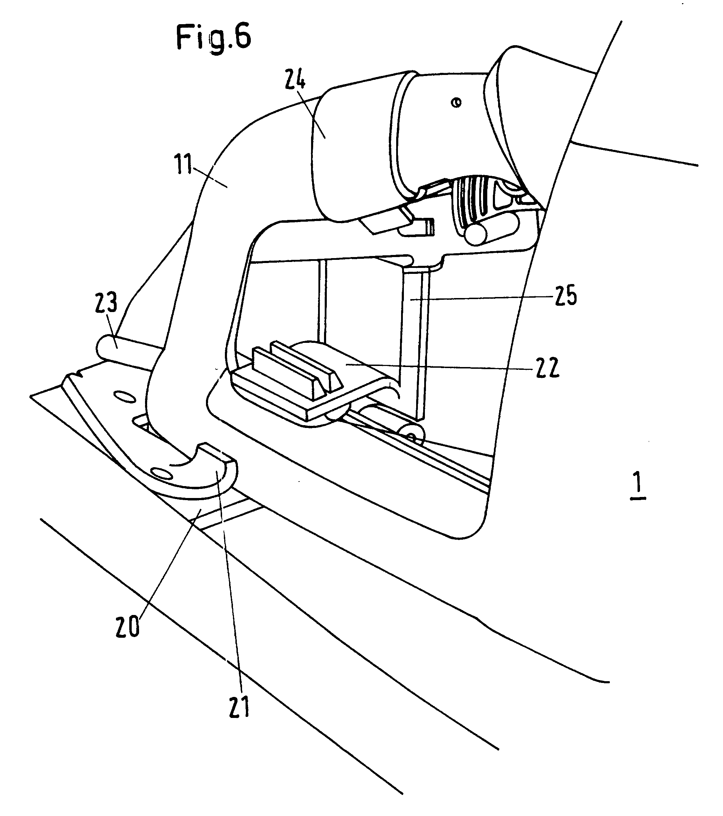

**Fig. 6** zeigt die zweite Aufnahme einer erfindungsgemäßen Halteeinrichtung. Zu erkennen ist der Handgriff 11 eines Handarbeitsgeräts 1. Die zweite Aufnahme 20 dient sowohl als Anschlag für die Rotationsbewegung als auch als Anschlag 21 für die seitliche Bewegung des Arbeitsgeräts. In der zweiten Aufnahme wird das Arbeitsgerät durch eine Arretierungseinrichtung 22 gehalten. Die Arretierungseinrichtung wird aus einer gelösten Position in eine arretierende Position um die Drehachse 23 bewegt. Die Arretierungseinrichtung verfügt dabei zusätzlich über einen Überwurf 24, der an dem Arm 25 der Arretierungseinrichtung angeordnet ist. Der Überwurf kann im oberen Bereich über den Handgriff 11 des Arbeitsgeräts übergeworfen werden. Er hält sich durch eine elastische Kraft selbsttätig am Handgriff fest und kann nur entgegen diese elastische Kraft, die durch eine Federwirkung des Überwurfs in sich erreicht wird, gelöst werden. Der Überwurf 24 betätigt gleichzeitig die unter dem Überwurf befindliche Sperrtaste des Arbeitsgeräts, so daß das Arbeitsgerät durch eine Fernbedienung betätigt werden kann, ohne daß zuvor die Sperrtaste manuell ausgelöst werden muß.
¹ 'which are arranged' in the source text.

## Patentansprüche

1. Halteeinrichtung an einer Führungseinrichtung zum Halten von Arbeitsgeräten (1) wie mobile Trennschleifer, insbesondere an einem Führungswagen (2), **dadurch gekennzeichnet, daß** die Halteeinrichtung über eine Aufnahme (3) mit mindestens einem Übergriffelement (4) verfügt, wobei das bzw. die Übergriffelemente (4) mit mindestens einem Halteelement (5) am Arbeitsgerät (1) derart zusammenwirken, daß das Arbeitsgerät (1) mit dem bzw. den Halteelementen (5) an dem bzw. den Übergriffelementen (4) der Aufnahme (3) einhängbar und durch Rotation um eine Achse von einer Einsetzposition in eine gehalterte Position überführbar ist, wobei das bzw. die Übergriffelemente (4) so geformt sind, daß sie in der gehalterten Position mit dem bzw. den Halteelementen (5) eine formschlüssige oder eine kombinierte form- und kraftschlüssige Verbindung eingehen.

2. Halteeinrichtung nach Anspruch 1, **dadurch gekennzeichnet, daß** das bzw. die Übergriffelemente Drahthaken (4) sind.

3. Halteeinrichtung nach Anspruch 1 oder 2, **dadurch gekennzeichnet, daß** die Aufnahme mit einer Stützfläche (8) am Arbeitsgerät (1) derart zusammenwirkt, daß bei der Überführung des Arbeitsgerätes (1) von der Einsetzposition in die gehalterte Position eine Kraft aufgebaut wird, die eine Relativbewegung zwischen Halteelement (5) und Übergriffelement (4) und/oder eine Kraftwirkung zwischen Halteelement (5) und Übergriffelement (4) bewirkt.

4. Halteeinrichtung nach Anspruch 3, **dadurch gekennzeichnet, daß** die Aufnahme (3) mit einer Stützfläche (8) an einem Gehäuse des Gerätes (1) zusammenwirkt.

5. Halteeinrichtung nach Anspruch 3, **dadurch gekennzeichnet, daß** die Aufnahme (3) mit einer Stützfläche (8), welche an dem oder den Halteelementen (5) des Arbeitsgerätes (1) angeordnet sind, zusammenwirkt.

6. Halteeinrichtung nach einem der Ansprüche 3 bis 5, **dadurch gekennzeichnet, daß** die Aufnahme (3) über ein elastisches Element (6) verfügt, das mit der Stützfläche (8) des Arbeitsgeräts (1) zusammenwirkt.

7. Halteeinrichtung nach einem der Ansprüche 3 bis 5, **dadurch gekennzeichnet, daß** die Aufnahme (3) mit einer Stützfläche (8) des Arbeitsgerätes (1), welche als elastisches Element ausgebildet ist, zusammenwirkt.

8. Halteeinrichtung nach Anspruch 6 oder 7, **dadurch gekennzeichnet, daß** die maximale Strecke, um die das elastische Element (6) in der gehalterten Position des Arbeitsgerätes (1) noch verformbar ist, kleiner ist als der Übergriff des bzw. der Übergriffelemente (4).

9. Halteeinrichtung nach einem der Ansprüche 6 bis 8, **dadurch gekennzeichnet, daß** das elastische Element (6) eine progressiv ansteigende Federkraft aufweist.

10. Halteeinrichtung nach einem der Ansprüche 6 bis 9, **dadurch gekennzeichnet, daß** das elastische Element ein federnder Drahtbügel (6) ist.

11. Halteeinrichtung nach Anspruch 10, **dadurch gekennzeichnet, daß** der Drahtbügel (6) einstückig mit dem bzw. den Übergriffelementen (4) ausgeführt ist.

12. Halteeinrichtung nach einem der Ansprüche 1 bis 11, **dadurch gekennzeichnet, daß** die Halteeinrichtung über eine lösbare Arretierungseinrichtung verfügt, die die Rotation des Arbeitsgerätes (1) aus der gehalterten Position heraus sperrt.

13. Halteeinrichtung nach einem der Ansprüche 1 bis 12, **dadurch gekennzeichnet, daß** die Halteeinrichtung über eine zweite Aufnahme (20) verfügt, die die Rotationsbewegung des Arbeitsgerätes (1) bei Erreichen der gehalterten Position begrenzt.

14. Halteeinrichtung nach Anspruch 13, **dadurch gekennzeichnet, daß** die zweite Aufnahme (20) über einen oder mehrere Anschläge (21) verfügt, die eine Bewegung des Arbeitsgerätes (1) normal zur Drehebene der Rotationsbewegung einschränken.

15. Halteeinrichtung nach einem der Ansprüche 12 bis 14, **dadurch gekennzeichnet, daß** die Arretierungseinrichtung (22) der zweiten Aufnahme (20) zugeordnet ist.

16. Halteeinrichtung nach Anspruch 15, **dadurch gekennzeichnet, daß** die Arretierungseinrichtung (22) durch eine Drehbewegung um eine senkrecht zur Drehachse des Arbeitsgerätes (1) beim Einhängvorgang stehende Achse (23) von einer gelösten in eine arretierende Position überführbar ist.

17. Halteeinrichtung nach Anspruch 15 oder 16, **dadurch gekennzeichnet, daß** die Arretierungseinrichtung (22) über einen Überwurf (24) verfügt, der mit einer Fläche des Arbeitsgeräts (1) derart zusammenwirkt, daß der Überwurf (24) in der arretierenden Position der Arretierungseinrichtung (22) durch eine elastische Kraft in Kontakt mit der Fläche des Arbeitsgeräts (1) gehalten wird.

## Claims

1. A holding device on a guiding device for holding implements (1) such as mobile abrasive wheel cutters, more particularly on a guiding truck (2), **characterised in that** the holding device is provided with a mount (3) comprising at least one overlapping element (4), the overlapping element or elements (4) cooperating with at least one holding element (5) on the implement (1) in such a way that the implement (1) may be suspended by the holding element or elements (5) on the overlapping element or elements (4) of the mount (3) and by means of rotation about an axis may be transferred from an operative position into a mounted position, the overlapping element or elements (4) being shaped such that in the mounted position they form a positive or a combined positive and non-positive connection with the holding element or elements (5).

2. A holding device according to claim 1, **characterised in that** the overlapping element or elements are wire hooks (4).

3. A holding device according to claim 1 or 2, **characterised in that** the mount cooperates with a supporting surface (8) on the implement (1) in such a way that when the implement (1) is transferred from the operative position into the mounted position, a force is created which brings about a relative movement between the holding element (5) and the overlapping element (4) and/or a force effect between the holding element (5) and the overlapping element (4).

4. A holding device according to claim 3, **characterised in that** the mount (3) cooperates with a supporting surface (8) on a housing of the implement (1).

5. A holding device according to claim 3, **characterised in that** the mount (3) cooperates with a supporting surface (8) which [is]¹ arranged on the holding element or elements (5) of the implement (1).

6. A holding device according to one of claims 3 to 5, **characterised in that** the mount (3) is provided with a resilient element (6) which cooperates with the supporting surface (8) of the implement (1).

7. A holding device according to one of claims 3 to 5, **characterised in that** the mount (3) cooperates with a supporting surface (8) of the implement (1), which supporting surface is a resilient element.

8. A holding device according to claim 6 or 7, **characterised in that** the maximum distance by which the resilient element (6) is still deformable in the mounted position of the implement (1) is shorter than the overlap of the overlapping element or elements (4).

9. A holding device according to one of claims 6 to 8, **characterised in that** the resilient element (6) has a progressively increasing resilience.

10. A holding device according to one of claims 6 to 9, **characterised in that** the resilient element is a flexible wire bow (6).

11. A holding device according to claim 10, **characterised in that** the wire bow (6) is made as one piece with the overlapping element or elements (4).

12. A holding device according to one of claims 1 to 11, **characterised in that** the holding device is provided with a releasable arresting mechanism which blocks the rotation of the implement (1) out of the mounted position.

13. A holding device according to one of claims 1 to 12, **characterised in that** the holding device is provided with a second mount (20) which limits the rotational movement of the implement (1) when the mounted position is reached.

14. A holding device according to claim 13, **characterised in that** the second mount (20) is provided with one or more stops (21) which restrict a movement of the implement (1) perpendicular to the plane of rotation of the rotational movement.

15. A holding device according to one of claims 12 to 14, **characterised in that** the arresting mechanism (22) is associated with the second mount (20).

16. A holding device according to claim 15, **characterised in that** the arresting mechanism (22) is transferable from a released position into an arresting position by means of a rotational movement about an axis (23) extending perpendicular to the axis of rotation of the implement (1) in the suspending process.

17. A holding device according to claim 15 or 16, **characterised in that** the arresting mechanism (22) is provided with a clasp (24) which cooperates with a surface of the implement (1) in such a way that, in the arresting position of the arresting mechanism (22), the clasp (24) is held by means of a resilient force in contact with the surface of the implement (1).

## Revendications

1. Dispositif de fixation sur un dispositif de guidage pour fixer des appareils de travail (1), tels que des tronçonneuses mobiles, en particulier sur un chariot de guidage (2), **caractérisé en ce que** le dispositif de fixation comporte un support (3) avec au moins un élément d'accrochage (4), le ou les éléments d'accrochage (4) coopérant avec au moins un élément de retenue (5) sur l'appareil de travail (1) de manière telle, que l'appareil de travail (1) puisse s'accrocher avec le ou les éléments de retenue (5) sur les éléments d'accrochage (4) du support (3) et, par rotation autour d'un axe, puisse être amené d'une position d'engagement dans une position de fixation, le ou les éléments d'accrochage (4) étant conformés de telle sorte que, dans la position de fixation, ils forment avec le ou les éléments de retenue (5) une liaison par complémentarité de formes ou une liaison combinée par complémentarité de formes et par serrage.

2. Dispositif de fixation selon la revendication 1, **caractérisé en ce que** le ou les éléments d'accrochage sont des crochets en fil (4) métallique.

3. Dispositif de fixation selon la revendication 1 ou 2, **caractérisé en ce que** le support coopère avec une surface d'appui (8) sur l'appareil de travail (1) de manière telle que lorsqu'on amène l'appareil de travail (1) de la position d'engagement dans la position de fixation, une force est engendrée, qui provoque un déplacement relatif entre l'élément de retenue (5) et l'élément d'accrochage (4) et/ou une interaction de forces entre l'élément de retenue (5) et l'élément d'accrochage (4).

4. Dispositif de fixation selon la revendication 3, **caractérisé en ce que** le support (3) coopère avec une surface d'appui (8) sur une carrosserie de l'appareil de travail (1).

5. Dispositif de fixation selon la revendication 3, **caractérisé en ce que** le support (3) coopère avec une surface d'appui (8) qui est disposée sur le ou les éléments de retenue (5) de l'appareil de travail (1).

6. Dispositif de fixation selon une des revendications 3 à 5, **caractérisé en ce que** le support (3) comporte un élément (6) élastique, qui coopère avec la surface d'appui (8) de l'appareil de travail (1),

7. Dispositif de fixation selon une des revendications 3 à 5, **caractérisé en ce que** le support (3) coopère avec une surface d'appui (8) de l'appareil de travail (1), qui est conformée en élément élastique.

8. Dispositif de fixation selon la revendication 6 ou 7, **caractérisé en ce que** la course maximale de laquelle l'élément (6) élastique, dans la position de fixation de l'appareil de travail (1), peut encore déformé est plus petite que le recouvrement de ou des éléments d'accrochage (4).

9. Dispositif de fixation selon une des revendications 6 à 8, **caractérisé en ce que** l'élément (6) élastique présente une force élastique qui croît progressivement.

10. Dispositif de fixation selon une des revendications 6 à 9, **caractérisé en ce que** l'élément élastique est un étrier (6) élastique en fil métallique.

11. Dispositif de fixation selon la revendication 10, **caractérisé en ce que** l'étrier (6) élastique est réalisé d'une pièce avec le ou les éléments d'accrochage (4).

12. Dispositif de fixation selon une des revendications 1 à 11, **caractérisé en ce que** le dispositif de fixation comporte un dispositif de verrouillage qui empêche la rotation de l'appareil de travail (1) hors de sa position de fixation.

13. Dispositif de fixation selon une des revendications 1 à 12, **caractérisé en ce que** le dispositif de fixation comporte un deuxième support (20), qui limite le mouvement de rotation de l'appareil de travail (1) lorsqu'il atteint la position de fixation.

14. Dispositif de fixation selon la revendication 13, **caractérisé en ce que** le deuxième support (20) comporte une ou plusieurs butées (21), qui limite(nt) un déplacement de l'appareil de travail (1) perpendiculairement au plan de rotation pour le mouvement de rotation.

15. Dispositif de fixation selon une des revendications 12 à 14, **caractérisé en ce que** le dispositif de verrouillage (22) est associé au deuxième support (20).

16. Dispositif de fixation selon la revendication 15, **caractérisé en ce que** le dispositif de verrouillage (22) peut être amené d'une position libérée dans une position verrouillée, par un mouvement de rotation autour d'un axe (23) qui est perpendiculaire à l'axe de rotation de l'appareil de travail (1) lors du processus d'accrochage.

17. Dispositif de fixation selon la revendication 15 ou 16, **caractérisé en ce que** le dispositif de verrouillage (22) comporte un étrier (24) qui coopère avec une surface de l'appareil de travail (1) de manière telle que dans la position de verrouillage du dispositif de verrouillage (22), l'étrier soit maintenu en contact avec la surface de l'appareil de travail (1) par une force élastique.
